(19) Europäisches Patentamt
European Patent Office
Office européen des brevets

(11) **EP 1 820 690 B1**

(12) **EUROPEAN PATENT SPECIFICATION**

(45) Date of publication and mention
of the grant of the patent:
**15.04.2009   Bulletin 2009/16**

(51) Int Cl.:
***B60N 2/56*** *(2006.01)*   ***B60N 2/00*** *(2006.01)*

(21) Application number: **06003479.0**

(22) Date of filing: **21.02.2006**

(54) **Automobile seat system**

Fahrzeugsitzsystem

Système de siège de véhicule

(84) Designated Contracting States:
**DE GB SE**

(43) Date of publication of application:
**22.08.2007   Bulletin 2007/34**

(73) Proprietor: **Ford Global Technologies, LLC**
**Dearborn, MI 48126 (US)**

(72) Inventor: **Olsson, Fredrik**
**SE-416 57 Göteborg (SE)**

(74) Representative: **Valea AB**
**Lindholmspiren 5**
**417 56 Göteborg (SE)**

(56) References cited:
**DE-A1- 10 026 656        DE-A1- 10 316 732**
**DE-A1- 10 350 557        US-A- 5 934 748**
**US-A- 6 003 950          US-A1- 2002 067 058**
**US-A1- 2003 214 160      US-A1- 2004 118 555**
**US-A1- 2005 085 968      US-A1- 2005 161 986**

**Description**

**Field of the invention**

The present invention relates to automobile seat systems, for example to automobile seat systems including corresponding seats which are capable in operation of providing greater user comfort. Moreover, the present invention also relates to methods of controlling such seat systems for providing enhanced user comfort. Furthermore, the present invention concerns automobile climate control systems including such seat systems.

**Background of the Invention**

In recent years, automobile manufacturers have continuously endeavored to design their automobiles to improve comfort of passengers and drivers in passenger compartments of such automobiles, for example:

  (a) by providing suitably supportive and soft seats with seat adjustment options in automobile compartments; and
  (b) by controlling temperature within automobile compartments for achieving compartment temperatures most acceptable to users.

Climate control within automobiles has become increasingly complex from earlier open-loop-control user adjustment of fan speed and blending of hot and cold air streams supplied to automobile compartments. Modern contemporary climate control within automobiles often employs air conditioning apparatus for ensuring a substantially constant user-selectable temperature within automobile passenger compartments; such air conditioning is implemented to function according to closed-loop feedback control aiming to achieve a reference set temperature within passenger compartments. In practice, such closed-loop feedback control is operable only approximately to achieve the reference set temperature.

As a further refinement to automobile comfort, it is known to provide automobiles with ventilated automobile passenger seats as described in a German patent no. DE10044168. The passenger seat described includes a carrier structure for a seat backrest provided with a cushion block. The cushion block is covered on its front side facing an associated seated passenger with a cushioned layer which is operable to allow passage of air therethrough. Moreover, a rear side of the cushion block remote from the seated passenger is implemented to include an impervious barrier layer so as to be substantially impervious to airflow therethrough. The impervious barrier layer comprises therein one or more openings for accommodating one or more fans. The fans are operable to transport air through the cushion block. The air flow is guided in a longitudinal direction of the seat backrest by guide elements embedded in the cushion block.

Furthermore, in the publication of US 2005/161986, a ventilated seat having a seating comfort system is disclosed. The seating comfort system comprises a vehicle seat including a seat cushion component and a seat backrest component, at least one of which provides a seat cushion and an air-permeable trim surface at the occupant contact areas of the seat. The system further includes an insert located beneath the trim surface of each ventilated component. The insert includes a first layer having a heater integrated therein. The system also includes a positive pressure blower in fluid communication with the insert for moving air there through and at least partially past an occupant in the seat.

Despite the use of passenger-compartment climate control in combination with ventilated seats in contemporary automobiles, many passengers and drivers find such advanced automobiles still not optimally comfortable in diverse ambient weather and driving conditions. Thus, the present invention is directed at addressing a technical problem of increasing passenger and driver comfort in automobiles.

**Summary of the invention**

An object of the present invention is to improve passenger and driver comfort in automobiles and similar such road vehicles.

According to a first aspect of the present invention, there is provided an automobile seat system including an automobile seat having a surface region contactable in use to a user of the seat, the seat system being configured to provide environmental control substantially at the surface region of the seat for providing enhanced user comfort, the seat system comprising:

  (a) a sensor arrangement for sensing one or more physical parameters at least substantially at the surface region; and
  (b) a ventilation arrangement for ventilating substantially the surface region;

wherein the seat system includes a feedback loop control for feedback controlling at least one of the one or more physical parameters by selectively controlling the ventilation arrangement.

The ventilation arrangement is configured to suck air from the surface region through the seat. The automobile seat system is further arranged with a second sensor arrangement, the second sensor arrangement being configured for sensing one or more physical parameters associated with the climate of the automobile compartment. One or more physical parameters are used to control the seat by selectively controlling the ventilation arrangement.

The invention is of advantage in that use of ventilated automobile seats with local feedback control is susceptible to improving passenger and driver comfort in automobiles.

Preferably, the seat system further includes a heating arrangement for heating substantially said surface region, wherein said feedback loop control is operable to control at least one of said one or more physical parameters by selectively controlling said heating arrangement. A selection of either ventilation or heating enables the seat system to cope with a wide range of conditions potentially from cold artic environmental conditions to hot equatorial environmental conditions.

Preferably, in the seat system, the ventilation arrangement is operable to suck air from the surface region through the seat. Suction of air into the seat is preferable to blowing air via an inner area of the seat to the surface region on account of more rapid cooling being possible and the feedback control loop being provided with a lower-order system to control, thereby potentially enabling more accurate control to be achieved.

Preferably, in the seat system, the sensor arrangement is substantially spatially located within the seat substantially adjacent to the surface region. Such close location is susceptible to providing a more rapid response for ensuring user comfort as well as providing the feedback loop control with a lower order system to control.

Preferably, in the seat system, the ventilation arrangement comprises a plurality of ventilation channels distributed within the seat, the plurality of ventilation channels being disposed so as to couple the surface region to one or more ventilation fans.

Preferably, in the seat system, the sensor arrangement includes one or more temperature sensors for measuring one or more temperatures of the surface region. Such one or more temperature sensors enable the feedback loop control to regulate the surface region selectively in response to temperature measurement signals derived from the one or more temperature sensors, thereby providing enhanced user comfort. However, the sensor arrangement optionally also includes sensors spatially remote from the seat, for example solar sensors for measuring an energy density of solar radiation and hence potential warming of the seat caused by such solar radiation.

More preferably, in the seat system, the sensor arrangement further includes at least one of: one or more humidity sensors for sensing humidity of the surface region, one or more pressure sensors for detecting a spatial extent of the user in contact with the surface region, and one or more sensors for sensing solar radiation. Such additional sensors are of benefit in that they enable other parameters affecting user comfort to be assessed so that ventilation or cooling applied to the surface region in operation can be more finely and appropriately adjusted to ensure enhanced user comfort.

Preferably, in the seat system, the feedback loop control is operable to maintain the surface region at a temperature regulated in respect of a desired degree of comfort selected by the user. For example, the desired degree of comfort optionally defines a reference temperature to which the temperature of the surface region is to be regulated. Temperature has beneficially been found to be a best indicator of user comfort for the seat system including feedback control.

Preferably, in the seat system, the surface region is configured to be in airflow communication with the ventilation arrangement, and with the sensor arrangement via a plurality of ventilation holes, the ventilation holes being disposed on the surface region in a spatial arrangement for optimally ventilating the user when seated in the seat. A nonuniform distribution of the perforation holes in response to anticipated shape of various parts of the user in proximity of the surface region of the seat enables a more effective control of temperature across the surface region to be achieved, thereby potentially increasing user comfort. Alternatively, or additionally, ventilation channels provided in the seat can have mutually different diameters for optimizing specific regions of the surface which are to be controlled in temperature.

Preferably, in the seat, the surface region is configured to be in airflow communication with the ventilation arrangement, and with the sensor arrangement via a plurality of ventilation holes, the ventilation holes having mutually different diameters for optimally ventilating the user when seated in the seat.

Preferably, in the seat, the feedback loop control is operable to being activated remotely for pre-cooling or pre-heating the surface region prior to the user assuming contact with the surface region. Such pre-cooling is of benefit when the automobile has been parked in bright sunlight for an extensive period so that the surface region of the seat attains an uncomfortably high temperature, for example approaching 80 °C or even 100 °C. Pre-cooling the seat is capable of ensuring that the user does not become scorched or experiences discomfort when first being seated in the seat after such a period of parking. Optionally, pre-cooling is invoked in response to an intensity of solar radiation sensed by the sensor arrangement.

According to a second aspect of the invention, there is provided a climate control system for an automobile including a passenger compartment including at least one seat system according to the first aspect of the invention, the control system including a first control feedback loop for executing climate control within the compartment, and a second feedback control loop for executing climate control of one or more surface regions of one or more seats of the one or more seat systems, the one or more surface regions being susceptible to being in contact with the user.

According to a third aspect of the invention, there is provided an automobile including a climate control system according to the third aspect of the invention.

According to a fourth aspect of the invention, there is provided a method of providing environmental control substantially at the surface region of a seat for providing enhanced user comfort, the surface region being contactable in use to a user of the seat, the method comprising steps of:

(a) sensing using a sensor arrangement of the seat one or more physical parameters substantially at the surface region;

(b) ventilating using a ventilation arrangement of the seat substantially the surface region, or heating using a heating arrangement of the seat substantially the surface region; and

(c) controlling using a feedback loop control at least one of the one or more physical parameters by selectively controlling the ventilation arrangement or the heating arrangement.

Preferably, the method includes a step of configuring the feedback loop control to render it operable to being activated remotely for pre-cooling or pre-heating the surface region prior to the user assuming contact with the surface region.

It will be appreciated that features of the invention are susceptible to being combined in any combination without departing from the scope of the invention as defined by the accompanying claims.

## Description of the diagrams

Embodiments of the invention will now be described, by way of example only with reference to the following diagrams wherein:

Figure 1    is a side-view of an automobile, the side-view illustrating factors influencing an inner climate experienced within a passenger compartment of the automobile;

Figure 2    is a side-view of a contemporary automobile seat provided with user-adjustable ventilation;

Figure 3    is a side-view of the automobile seat of Figure 2, wherein Figure 3 illustrates disposition of heating elements within the automobile seat;

Figure 4    is a first graph illustrating user-comfort performance of the automobile seat illustrated in Figures 2 and 3 in the automobile of Figure 1 equipped with contemporary climate control apparatus;

Figure 5    is a schematic representation of the automobile of Figure 1, the schematic representation illustrating certain parameters influencing passenger comfort within the automobile of Figure 1;

Figure 6    is a feedback representation of an automobile climate control system pursuant to the present invention;

Figure 7    is a second graph illustrating user-comfort performance of an automobile seat system implemented pursuant to the present invention in combination with a climate control system;

Figure 8    is an illustration of an automobile seat implemented pursuant to the present invention;

Figure 9    is a cross-sectional view through the automobile seat of Figure 8; and

Figure 10    is a further representation of an automobile climate control system pursuant to the present invention.

## Description of embodiments of the invention

Embodiments of the invention will now be described. In order to place the present invention in context, characteristics of contemporary automobile seats functioning in conjunction with automobile climate control will initially be elucidated.

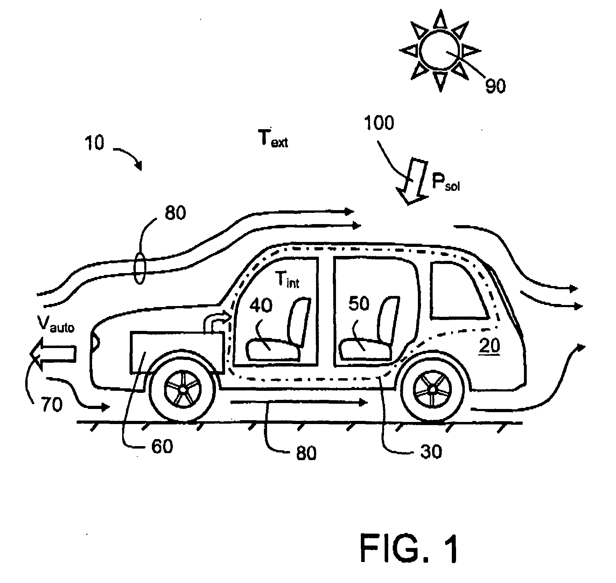

Referring to Figure 1, there is shown a contemporary automobile indicated generally by 10. The automobile 10 comprises an automobile structure 20 within which a passenger and driver compartment denoted by 30 is included. The compartment 30 includes front seats 40 and one or more rear seats 50; for example, the one or more rear seats 50 can optionally be implemented as a single broad sofa-type seat. Moreover, the automobile 10 is provided with a climate control unit (CCU) 60 including devices such as air-conditioning units, electrical air heaters, air filters and humidifiers; the climate control unit 60 is coupled in communication with the compartment 30. In operation, the automobile 10 travels at a velocity $V_{auto}$ in a forward direction denoted by an arrow 70 which causes air flow over and under the automobile 10, such air flow being denoted by 80; the air flow 80 is susceptible to causing heat loss or heat gain to the automobile 10 depending upon a difference between a temperature $T_{ext}$ external to the automobile 10 and a measured internal temperature $T_{int}$ inside the passenger and driver compartment 30. In use, the automobile 10 is exposed to solar radiation 100 from the sun 90; the solar radiation 100 is capable to delivering heat energy $P_{sol}$ to the automobile 10 as will be elucidated in more detail later.

Conventionally, a driver or passenger of the automobile 10 is able to set a desired target internal temperature $T_{ref}$ which the climate control unit (CCU) 60 is operable to try to establish within the compartment 30; namely, the control unit 60 is operable by feedback to try to adjust the measured internal temperature $T_{int}$ by input or extraction of heat energy from the compartment 30 so as to match the target temperature $T_{ref}$. The passenger or driver is further provided with an option of selecting seat heating or seat ventilation. The seat ventilation is optionally user-selectable to be at a plurality of different ventilation fan speeds. Thus, whereas the climate control unit 60 is susceptible to operating in a feedback mode to match the measured internal temperature $T_{int}$ with the target temperature $T_{ref}$, adjustment of seat heating and seat ventilation is user-selectable in essentially an open-loop control manner wherein the passenger or driver himself or herself provides feedback adjustment in response to their degree of comfort or discomfort as appropriate.

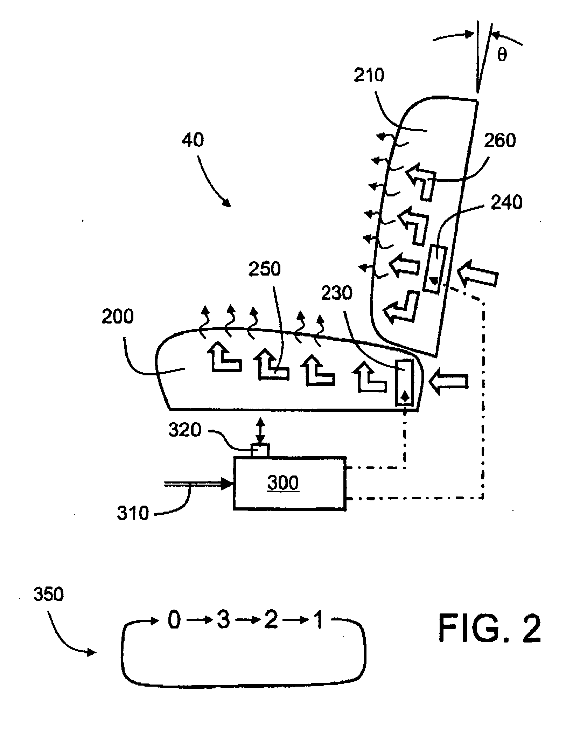

The contemporary seats 40, 50 will now be described in further detail with reference to Figure 2. In Figure 2, the seat 40 is generally indicated to include a seat portion 200 and a backrest portion 210. In operation, the seat portion 200 is substantially horizontal as illustrated, whereas the backrest portion 210 is near vertical, for example nominally at an angle $\theta$ in a range of 0° to 30° relative to a vertical direction. The angle $\theta$ is optionally user-adjustable for adjusting for optimal backrest comfort. The seat portion 200 and/or the backrest portion 210 include electrically-driven ventilation fans 230, 240 respectively. Moreover, the seat portion 200 and the backrest portion 210 include therein air channels for directing airflow generated by the fans 230, 240 in operation through the portions 200, 210 as denoted by arrows 250, 260 to diffuse finally at surfaces of the portions 200, 210 directed towards a body of a passenger or driver (not shown) seated in the seat 40. Electrical excitation to the fans 230, 240 is controllable from a control unit 300 provided with electrical power 310 from a battery, fuel cell or generator (not shown) of the automobile 10; the control unit 300 is optionally included as an integral part of the aforesaid climate control unit 60. The control unit 300 comprises a user-depressible switch 320 for controlling a degree of electrical excitation applied to the fans 230, 240 in operation. The switch 320 is preferable positioned on a central control column of the automobile 10. Repeated depression of the switch 320 preferable controls excitation to the fans 230, 240 in a cyclical manner as indicated by 350; the switch 320 is operable to control four different electrical excitations applied to the fans 230, 240 as elucidated in Table 1.

Table 1:

| Fan excitation state | Fan excitation applied |
|---|---|
| 0 | No electrical excitation applied to the fans 230, 240; impellers of the fans 230, 240 are not rotating |
| 1 | Lower electrical excitation is applied to the fans 230, 240; impellers of the fans 230, 240 are rotating at their lower rate of rotation |
| 2 | Medium electrical excitation is applied to the fans 230, 240; impellers of the fans 230, 240 are rotating at their intermediate rate of rotation |
| 3 | Higher electrical excitation is applied to the fans 230, 240; impellers of the fans 230, 240 are rotating at their higher rate of rotation |

The cyclical manner 350 is invoked in a manner illustrated in Figure 2. When the fans 230, 240 are energized at a fan excitation state 0, impellers of the fans 230, 240 are not rotating thereby resulting in insignificant airflow through the portions 200, 210. When the switch 320 is then depressed by the user, the control unit 300 is operable to switch to a fan excitation state 3, wherein the impellers of the fans 230, 240 are excited to rotate at their higher rate to cause a higher rate of airflow through the portions 200, 210, thereby providing the passenger or driver seated upon the seat 40 with a maximum degree of cooling. When the switch 320 is then depressed a further time by the user, the control unit 300 is operable to switch to a fan excitation state 2, wherein the impellers of the fans 230, 240 are excited to rotate at their intermediate rate to cause a medium rate of airflow through the portions 200, 210, thereby providing an intermediate degree of cooling. When the switch 320 is then depressed yet a further time by the user, the control unit 300 is operable to switch to a fan excitation state 1, wherein the impellers of the fans 230, 240 are excited to rotate at their lower rate to cause a lower rate of airflow through the portions 200, 210, thereby providing a lower degree of cooling. A yet further user depression of the switch 320 results in the control unit 300 switching to the aforementioned fan excitation state 0. Further user depression of the switch 320 causes the cyclical manner 350 to be repeated as described above.

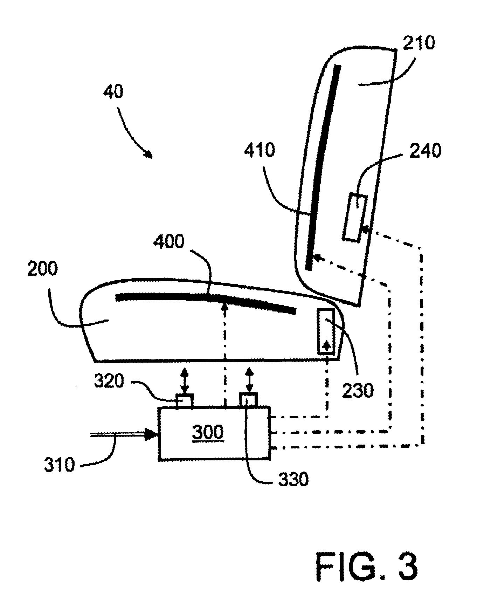

Referring to Figure 3, the seats 40, 50 are also provided with in-built heating features. The control unit 300 is provided with a further user-depressible switch 330 which is operable to control electrical excitation applied to resistive heating elements 400, 410 included in the portions 200, 210 of the seat 40 respectively. Heating of the seats 40, 50 can be selectively invoked in the automobile 10 by user-depression of the switch 330 in an ON-OFF manner.

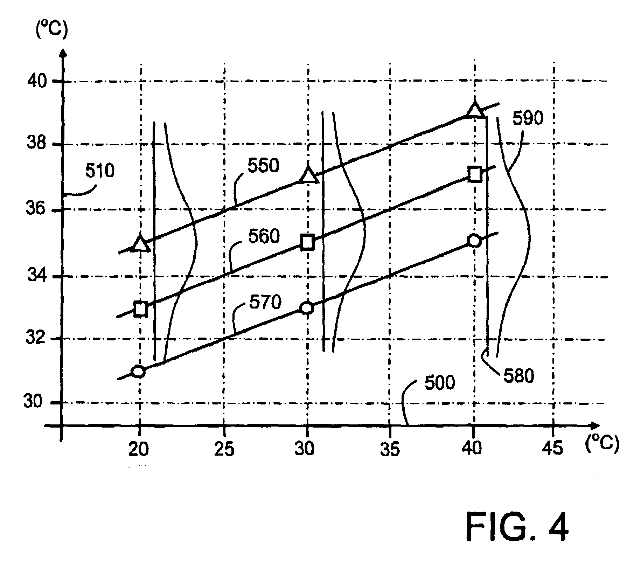

Thus, it is known to provide passenger and driver compartments 30 of contemporary automobiles 10 with climate control based on maintaining the measured internal temperature $T_{int}$ approximately at the target temperate $T_{ref}$ by way of temperature control feedback implemented using their climate control units 60. Moreover, it is further known to provide open-loop adjustment of passenger and driver comfort by way of open-loop cooling and heating features included in seats of such compartments. In such an automobile configuration, experimental measurements have been compiled which indicate that such contemporary systems do not perform as presumed. In Figure 4, there is shown a graph including an abscissa axis 500 denoting the external temperature $T_{ext}$. An ordinate axis 520 denotes a surface temperature $T_{surf}$ of the seat 40. Plotted on the graph are three curves 550, 560, 570 corresponding to the aforementioned fan excitation states 1, 2 and 3 respectively. Moreover, there is also shown an inset curve 590 with relation to a reference axis 580 denoting a proportion of population who consider a given corresponding surface temperature $T_{surf}$ to represent optimal comfort; for example, a median temperature for optimal comfort in the population is approximately 35 °C whereas certain people, for example in response to their body mass or metabolic rate, prefer a somewhat higher or lower temperature. It will be appreciated from studying the graph of Figure 3 that contemporary climate control provided by the climate control unit 60 is far from optimal such that the user would feel a need to adjust the settings of the switches 320, 330 in response to changes in external temperature $T_{ext}$. A reason for surprising results as presented in Figure 4 is the complexity of the climate in practice within the compartment 30. Rather than being an isothermal environment, the compartment 30 has complex temperature and humidity gradients in response to a number of passengers and driver included in the compartment 30 and external parameters such as ambient incident sunlight and airflow over external surfaces of the automobile 10.

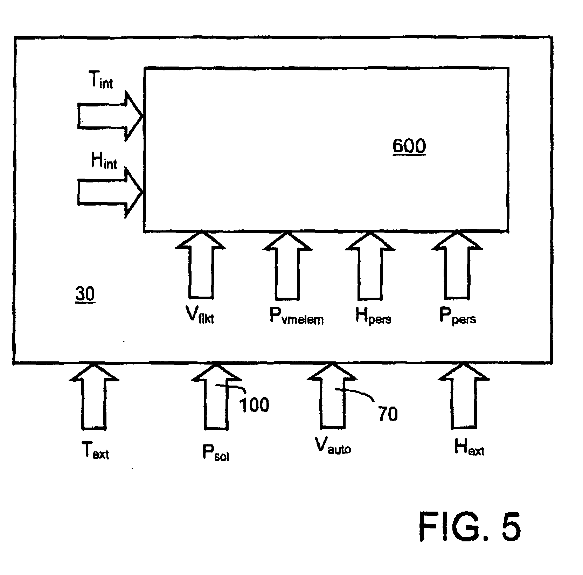

Such complexity of the climate within the compartment 30 is represented in Figure 5. A temperature difference between the external temperature $T_{ext}$ and the internal compartment temperature $T_{int}$ determines a rate of heat flow into or out of the compartment 30. Moreover, the solar radiation 100 is susceptible to providing a heating power input $P_{sol}$ to the compartment 30 as a complex function of an angle of incidence of the solar radiation 100 relative to angle of external surfaces of the automobile 10 and optical transmittivity of surfaces of the automobile 10; for example, window regions of the automobile 10 are operable to transmit potentially more of the solar radiation 100 into the compartment 30 in comparison to metal panels of bodywork of the automobile 10, although dependent on color of surface finish of such metal panels. Furthermore, heat energy loss or gain from the compartment 30 is also dependent on the velocity of travel of the automobile $V_{auto}$, for example by way of wind chill factor. Moreover, external humidity $H_{ext}$ can affect internal humidity $H_{int}$ of the compartment 30 which in turn has a physiological affect on perceived optimal user comfort.

Addressing now the seats 40, 50 included within the compartment 30 with reference to Figure 5, user comfort when users are seated in the seats 40, 50 is governed by a combination of complex factors including:

(a) user skin surface temperature;
(b) humidity at various body regions, for example in a back region, in an under-arm region, in an upper-leg region;
(c) draughts over exposed skin surfaces causing differential cooling, for example evaporative cooling in regions susceptible to sweating; and
(d) incident solar radiation absorbed on various regions of the user's body, such absorption also being a function of a color of the user's clothing.

It will thus be appreciated in the context of the present invention that optimal passenger and driver comfort is a highly complex problem and therefore difficult to address as a technical problem. A local environment representing the user, namely passenger or driver, is denoted by 600 in Figure 5. Even if the climate control unit 60 is operable perfectly to maintain the measured internal temperature $T_{int}$ accurately adjusted to match the aforesaid desired temperature $T_{ref}$, there are many parameters that can influence the local user environment 600. Such parameters affecting the local environment 600 include the measured internal temperature $T_{int}$, the humidity $H_{int}$ within the compartment 30, the electrical excitation applied to the fans 230, 240, heating power $P_{vmelem}$ applied by the heating elements 400, 410 to the local environment 600, metabolic body heat $P_{pers}$ generated by the user seated in the seat 40, 50, and sweating or perspiration generated by the user influencing local humidity $H_{pers}$ pertaining to the local environment 600. Although not documented in Figure 5, solar radiation transmitted through windows of the automobile 10 and incident on the seats 40, 50 can also influence optimal user comfort.

It will thus be appreciated that attaining optimal user comfort in the compartment 30 is a highly complex problem.

The inventors have however appreciated an approach to improve upon existing contemporary climate control systems for automobiles as now will be elucidated.

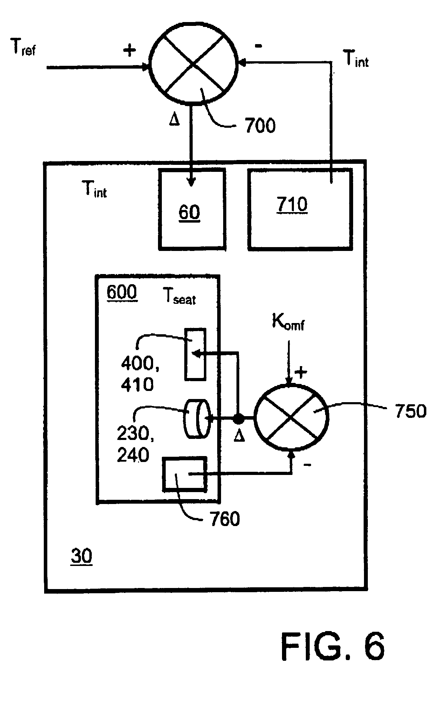

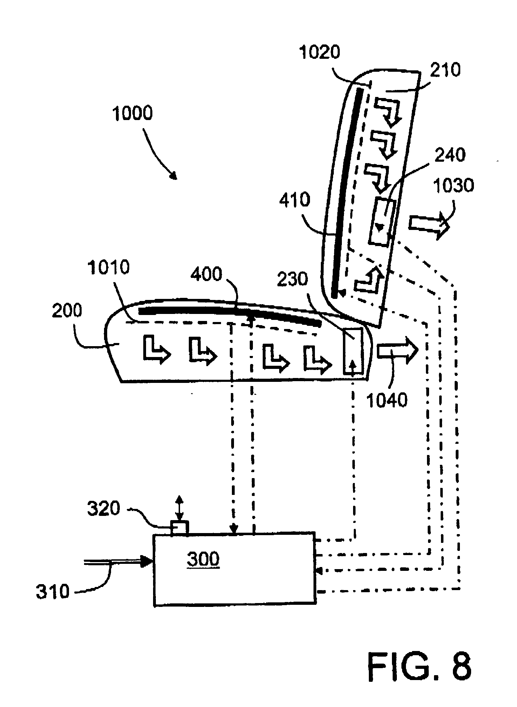

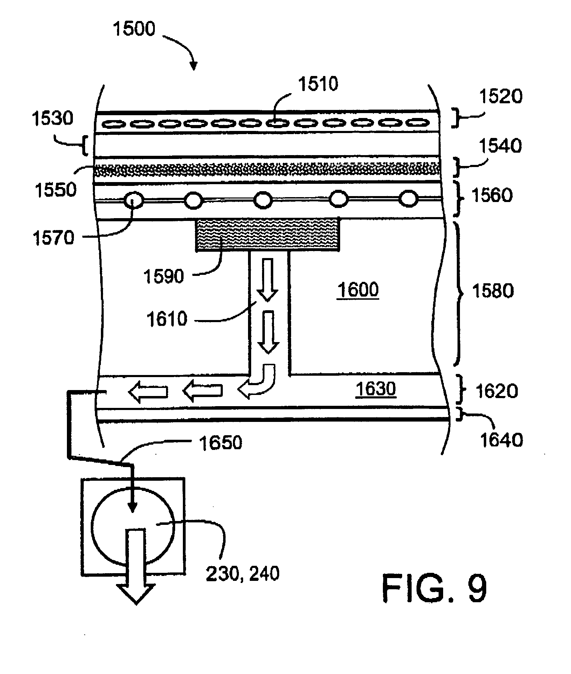

Referring to Figure 6, there is shown a climate control system pursuant to the present invention; the system includes a feed-back controlled ventilated automobile seat as a component part thereof; beneficially, the present invention is applied to a seat as depicted in Figures 8 and 9, although the seats 40, 50 are also capable of being adapted to function pursuant to the present invention. The compartment 30 is provided with a temperature sensor arrangement 710, either measuring at a single point within the compartment 30 or at several spatially different points within the compartment 30. The measured internal temperature of the compartment, $T_{int}$, is conveyed to an error generator 700 forming a part of the climate control unit 60; an error temperature difference from the error generator 700 is used to control cooling or heating provided by the climate control unit 60. The aforementioned local environment 600 for purposes of implementing the present invention is assumed to be substantially a surface of the seat 40, 50 on account of skin temperature-sensing nerves of the user being a best indication of optimal user comfort. A region of the surface of the seat 40, 50 defining the environment 600 is provided with a sensor arrangement denoted by 760; the sensor arrangement 760 optionally comprises a plurality of distributed temperature sensors. More optionally, the sensor arrangement 760 can be complemented by other types of sensors, for example humidity sensors for measuring local humidity variations occurring in operation within the environment 600. Also, optionally the sensor arrangement 760 includes input components and/or sensors located at positions other than in a vicinity of the automobile seat 40, 50. Examples of such input components and/or sensors that are optionally included in the sensor arrangement 760 include: a cooling fluid temperature sensor operable to sense a temperature of a cooling fluid, an arrangement for providing an indication of an air-conditioning fan control voltage, a temporal sensor or clock for measuring a time elapsed since start/restart of the automobile 10, a temporal sensor or clock for measuring a time elapsed since the automobile 10 has been stationary or in a parked state, a monitor for sensing climate control temperature setting. Optionally, the sensor arrangement 760 includes one or more sensors and/or input components for sensing or monitoring the following parameters for use in controlling the seat 40, 50:

(a) ambient temperature around the automobile 10;
(b) the solar irradiation or solar flux 100;
(c) a temperature in the compartment 30;
(d) a temperature of a coolant of the automobile 10;
(e) an excitation voltage applied to a blower or fan operable to circulate air within the compartment 30, such a blower or fan is not only optionally operable to circulate air within the compartment 30 but also optionally to provide the compartment 30 with air from ambient outside the automobile 10; and
(f) a sensor operable to sense an air distribution mode or path utilized within the compartment 30.

Measurement signals provided in operation from the sensor arrangement 760 are coupled to an error generator 750 which has a user-adjustable comfort parameter $K_{omf}$ as an input reference. The error generator 750 is operable to generate error signals for controlling excitation to the fans 230, 240 and also to the heating elements 400, 410. Optionally, the error generator 750 is included as a part of the climate control unit 60. Thus, in Figure 6, there is depicted an outer feedback control loop for controlling comfort of the compartment 30 and an inner feedback control loop for controlling comfort of the local environment 600. The inner control loop is operable to try to match a temperature of the seat 40, 50 $T_{seat}$ to a temperature determined by or derived from the comfort parameter $K_{omf}$. It will be appreciated that the inner control loop can adjust the temperature, optionally also the humidity, of the local environment 600 by selectively using one or more of the fans 230, 240 for cooling the environment 600, or one or more of the heaters 400, 410 for heating the environment 600. In the system depicted in Figure 6, the comfort parameter $K_{omf}$ can be selected by way of the switch 320 as elucidated in the foregoing, however with a difference that the various states 0 to 3 of the switch 320 no longer simply control a degree of electrical excitation applied to the fans 230, 240 as in known contemporary climate control systems, but rather is used by the user to select a desired degree of comfort.

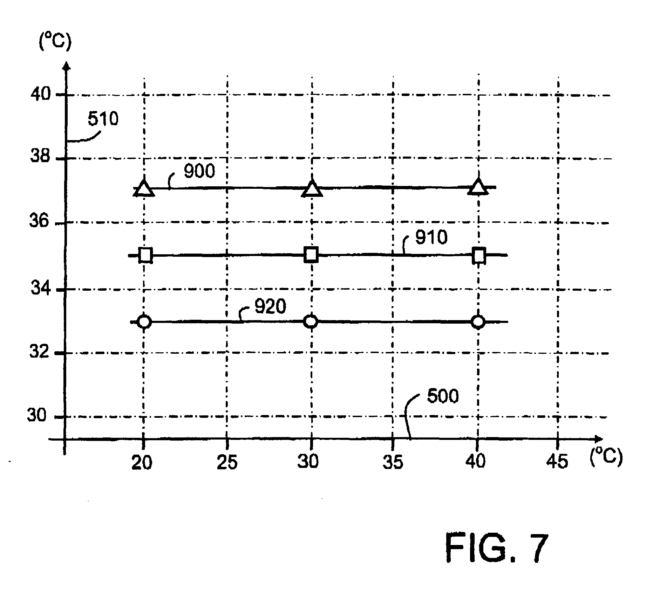

Practical studies undertaken by the inventors have shown that inclusion of the inner control loop to control comfort of the environment 600 can have dramatic effects on user comfort. Referring to Figure 7, there is shown external ambient temperature and seat surface temperature denoted by 500, 510 in a similar manner to Figure 4. Inclusion of the aforesaid inner feedback control loop has an effect of desensitizing the surface temperature 510 from variations in external factors, such as the external temperature $T_{ext}$, thereby considerably improving user comfort. In Figure 7, curves 900, 910, 920 correspond to comfort states 1, 2 and 3 respectively; the comfort state 2 is designed to correspond to optimal comfort for a median of population, whereas the comfort state 1 is designed to be susceptible to nominally employing substantially in a range of 3 to 20% of ventilation capacity of the fans 230, 240, and whereas the comfort state 3 is designed to be susceptible to nominally employing most of the ventilation capacity of the fans 230, 240.

When implementing the present invention in the automobile 10, the seats 40, 50 are optionally and beneficially modified in a manner as indicated by 1000 in Figure 8. The seat 1000 includes the seat portion 200 and the backrest portion 210. The one or more ventilation fans 230 of the seat portion 200 are configured to suck air from the seat portion 200, namely to generate in operation a suction airflow 1040 as illustrated. Similarly, the one or more ventilation fans 240 of the backrest portion 210 are configured to suck air from the backrest portion 210, namely also to generate in operation a suction airflow 1030 as illustrated. Use of the suction airflows 1030, 1040 is of benefit in that exterior surfaces of the seat portions 200, 210 can be more rapidly cooled in comparison to using the one or more fans 230, 240 to blow air into the seat; such rapid cooling is of considerable benefit when the seat portions 200, 210 have been exposed to ambient solar radiation when the automobile 10 has been parked without climate control in operation; solar radiation is known to approach an energy density of 1 kW/m$^2$ for sun inclinations substantially normal to the Earth's surface and can potentially cause the exterior surface of the seat 1000 to attain a temperature approaching 80 °C, even potentially as high as 100 °C, when ventilation is not applied to the seat 1000.

The seat 1000 pursuant to the present invention also includes the aforementioned heating elements 400, 410 as illustrated. However, the seat 1000 further includes sensor arrangements 1010, 1020 in the seat portions 200, 210 respectively as illustrated. The sensor arrangements 1010, 1020 each include one or more spatially distributed temperature sensors for sensing substantially surface temperatures presented to the user when seated in the seat 1000 and in contact with its outer surfaces; optionally, the sensor arrangements 1010, 1020 also include other types of sensors such as humidity sensors and/or pressure sensors to sense a region of the seat 1000 whereat the user is seated, for example to gauge a spatial extent of the user seated on the seat 1000 and spatially adjust application of power to the heating elements 400, 410 accordingly. As described earlier, the switch 320 is, pursuant to the present invention, used to select the comfort state $K_{omf}$ in a cyclical manner akin to 350.

The inner control loop is preferably provided with a function that an approach of the user to the automobile 10, for example the user 10 unlocking the automobile 10 from a distance on per se known manner, for instance using an infrared (IR) data link from a user key to the automobile 10, is operable to invoking ventilation cooling to the seat 1000 so that the outer surface of the seat 1000 when exposed to strong sunlight is cooled by a time that the user enters the compartment 30 to sit upon the seat 1000, thereby avoiding the user having an uncomfortable feeling of skin bums or scorching.

Construction of the seat 1000 pursuant to the present invention will now be described in greater detail with reference to Figure 9. A cross-section through the seat portion 200 of the seat 1000 is indicated generally by 1500. A cross-sectional profile through the backrest portion 210 of the seat 1000 is substantially similar. The cross-section 1500 comprises an upper surface layer 1520 implemented in perforated upholstery material, such as perforated leather, namely including an array of perforation holes 1510 therein susceptible to enabling airflow through the upper layer 1520; the perforation holes 1510 are also referred to as being ventilation holes and can optionally be produced by methods other than perforating the upper surface layer 1520. The perforation holes 1510 are preferably differentially spatially distributed in density to those regions of the seat portion 200 and the backrest portion 210 where most ventilation is required for providing enhanced user comfort. For example, the perforation holes 1510 are preferentially distributed to an upper surface region of the backrest portion 210 and to a peripheral surface region of the seat portion 200, so that the lower surface region of the backrest portion 210 and the central region of the seat portion 200 are preferably provided with a relatively lower concentration of the perforation holes 1510 in comparison to peripheral regions of the seat portion 200, 210; such a disposition of the holes 1510 is susceptible to ensuring that ventilation provided from the one or more fans 230, 240 is optimally utilized for ensuring user comfort. Alternatively, the perforation holes 1510 can be implemented with diameters which spatially vary across the surfaces of the seat and backrest portions 200, 210. Beneath the upper layer 1520 is provided a backing layer 1530 which is permeable to airflow and also mechanically operable to spread concentrations of load forces experienced by the upper layer which could potentially damage a heating element layer 1540 included below the backing layer 1530. The heating element layer 1540 includes heating devices denoted by 1550 for implementing the heating elements 400, 410; the heating devices 1550 are, for example, implemented as a thin-film metallic heating film or by a mesh of heating wires. Below the heating element layer 1540 is included a sensor arrangement layer 1560 including the aforementioned sensor arrangement 760 including one or more temperature sensors 1570; the sensor arrangement layer 1560 in combination with the heating element layer 1540 are spatially adjacent to define substantially the local environment 600. On account of suction provided by the fans 230, 240, an indication of heat output $P_{pers}$ of the user and/or user humidity $H_{pers}$ are also sensed at the sensor arrangement layer 1560, thereby effectively including the user's skin within the local environment 600. Such a juxtaposition of layers in combination with the one or more fans 230, 240 providing a suction airflow through the portions 200, 210 is a contributing factor to the present invention being susceptible to providing enhanced user comfort in comparison to known contemporary ventilate automobile seats.

Below the sensor layer 1560 is included a spacing layer 1580 including periodically felt inserts 1590 and perpendicular ventilation channels 1610 therein as illustrated in Figure 9. Remote from the upper surface layer 1520, in close proximity to a rear surface layer 1640 and beneath the spacing layer 1580 is included a ventilation layer 1620 comprising a labyrinth of ventilation channels 1630 orientated substantially parallel to the upper surface layer 1520 and operable to couple airflow from the perpendicular ventilation channels 1610 to the one or more fans 230, 240 as appropriate. Disposing the channels 1610, 1630 as far as possible from the layers 1540, 1560 and hence the local environment 600 is susceptible to improving thermal performance of the seat 1000 and hence rapidity and accuracy of performance of the aforesaid inner control loop. Moreover, optionally, the ventilation channels 1610, 1630 are of mutually different diameter for providing a preferential distribution of ventilation in the seat 1000 for enhancing user comfort.

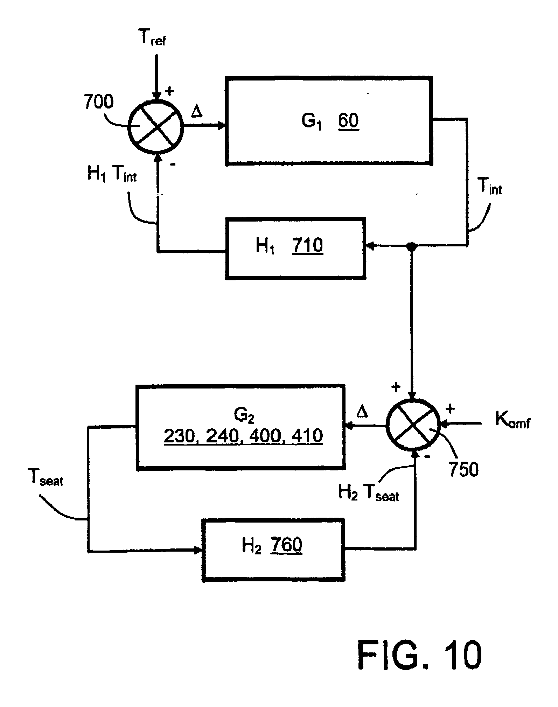

From elucidation in the foregoing, it will be appreciated that the present invention is not only concerned with an advanced implementation of automobile seat configured to include local feedback for enhancing user comfort, but also to a climate control system including one or more such automobile seats. In Figure 10, a feedback representation of a climate control system pursuant to the present invention is shown. The compartment 30 is associated with a first feedback loop having a forward transfer function $G_1$ and with a feedback function $H_1$. Similarly, a second feedback loop associated with the seat 1000 has a forward transfer function $G_2$ with an associated feedback function $H_2$. The feedback representation of Figure 10 is substantially describable by way of an Equation 1 (Eq. 1):

$$\frac{T_{seat}}{K_{omf}} = \left[ \frac{G_2}{1 + G_2 H_2 + \left( \dfrac{G_2 G_1}{1 + G_1 H_1 T_{int}} \right)} \right] \qquad \text{Eq. 1}$$

It will be observed that that a higher forward gain $G_2$ for the second feedback control loop is of benefit in rendering passenger comfort less sensitive to temperature fluctuations in the first feedback loop; such a benefit accounts for differences between the graphs of Figures 4 and 7. Moreover, the seat 1000 represents a relatively simple substantially first order response in view of the heating elements 400, 410 and the upper surface layer 1520 being in close proximity to the user seated upon the seat 1000 so that air is rapidly transferred from the upper surface to the sensor arrangement layer 2560. Such simplicity of response of the seat 1000 should be contrasted with a complex forward gain response represented by the compartment in conjunction with the climate control unit 60 where transport delay and high order characteristic caused by stagnant regions of air in the compartment 30 can represent a complex feedback problem for the climate control unit 60 and its associated feedback control loop. Although Figure 10 illustrates the first and second feedback loops in terms of temperature, it will be appreciated that the forward transfer functions $G_1$ and $G_2$ can be highly complex with multiple input parameters and multiple output parameters depending on a diversity of environmental parameters being accommodated when implementing feedback.

It will be appreciated that modifications to embodiments of the invention described in the foregoing are possible without departing from the scope of the invention as defined by the accompanying claims. For example, the seat portions 200, 210 of the seat 1000 can be provided with a plurality of fans, each fan serving different regions of the portions 200, 210. The sensor arrangement layer 1560 can optionally include pressure sensors for detecting an area occupied by the user when seated upon the seat 1000, and the second feedback loop can be operable to differentially and selectively activate the plurality of fans in response to spatial position of the user. Moreover, in the seat 1000, the heating elements 400, 410 can be implemented as a plurality of sub-heaters which the aforesaid second feedback loop can differentially invoke in response to local variations of measured temperature at regions of the portions 200, 210; for example sub-heaters can be beneficially activated around a peripheral of where the user is seated upon the seat 1000 so as to avoid "hot-spots" and ensure most heating is applied where air is streaming past the user rather than where the user is seated and effectively blocking the holes 1510 in the upper surface layer 1520. Beneficially, the perforation holes 1510 and the channels 1610, 1630 in the seat 1000 are non-uniformly included within the seat 1000 to account for regions of the portions 200, 210 whereat the user normally makes contact. The sensors included in the sensor arrangement layer 1560 are preferably implemented as micromachined or thin-film sensors for reducing manufacturing cost, enhancing robustness and achieving compactness of construction of the seat 1000.

Optionally, the seat 1000 can be used to upgrade existing contemporary automobiles; the seat 1000 can also be employed as an integral part of new designs of automobiles. Moreover, in the automobile 10, the seat 1000 can be used solely for the driver's seat, or for both front seats, or for all seats of the automobile 10 depending on a comfort performance desirable for the compartment 30. Yet more optionally, the seat 1000 can be rendered user-switchable between contemporary open-loop control via the user or closed-loop feedback controlled as depicted in Figure 10.

Optionally, one or more of the heating elements 400, 410 can be omitted where a lesser degree or no heating of the seat 1000 is required in operation, for example when the automobile 10 is intended for operation solely in hot climates such as equatorial regions of the World.

Ventilation of the seat 40, 50, 1000 when implemented pursuant to the present invention is further susceptible to refinement. For example, a degree of ventilation applied to the seat 1000 is beneficially at least partially varied in response to a temperature set by the user for the compartment 30, namely the desired comfort $K_{omf}$ is at least partially modified in response to the temperature $T_{ref}$ as presented in Figure 10. For example, if the user has been exercising vigorously before becoming seated in the seat 1000, the user's prior physical activity requires increased ventilation of the seat 1000 to achieve an optimal degree of comfort.

In Figure 10, a control error for the compartment corresponds substantially to $T_{ref} - H_1 T_{int}$. In a dynamic situation wherein the automobile 10 has been parked in a position subject to considerable solar radiation 100 and then driven into shade, the transfer function $G_1$ in Figure 10 is not capable of providing an instantaneous response in that the compartment 30 is susceptible to exhibiting thermal time lag. In such a scenario, the seat 1000 and its associated secondary feedback loop represented by functions $G_2$ and $H_2$ in Figure 10 can be operated to provide enhanced ventilation to at least partially compensate for lack of sufficient dynamic response in the function $G_1$. By such refinement, rapid user comfort within the compartment 30 when the user is seated upon the seat 1000 can be achieved in response to dynamic situations.

The seat 1000 itself is also susceptible to further improvement in that a flow resistance to air flow through the seat 1000 can be sensed by one or more pressure sensors in aforementioned channels preceding one or more of the fans 230, 240. Optionally, the flow resistance to air flow through the seat 1000 can be sensed by sensing or otherwise monitoring electrical current consumed by one r more of the fans 230, 240. By measuring or otherwise determining the airflow through the seat 1000, an indication or body weight, position and spatial extent of the user can be obtained. From such an indication, ventilation through the seat 1000 can be modified in response to enhance comfort of the user when seated in the seat 1000.

Optionally, a sensor arrangement remote from the seat 1000 but directed towards the seat 1000 for sensing one or more parameters thereof can be used for implementing the aforesaid second control loop. Such an implementation, for example, can employ one or more infra-red (IR) sensitive camera directed towards the seat 1000 and used to measure a temperature of its surface and that of the user. Such an implementation is to be construed to be within the scope of the present invention as defined by the accompanying claims.

Reference numerals included within parentheses in the claims are intended to assist understanding of the subject matter claimed in the claims, and are not to be construed to be limiting the scope of the claims. Reference to the singular is also to be construed to relate to the plural.

Terms used in describing and claiming the present invention such as "include", "comprise", "consist of", "have", "are", "incorporate", are to be construed in a non-exclusive manner, namely to allow for other parts or components to be present which are not explicitly indicated.

## Claims

**1.**    An automobile seat system (750, 760, 1000) including an automobile seat (1000) having a surface region (1520) contactable in use to a user of said seat (1000), said automobile seat (1000) intended to be positioned in an automobile compartment (30),
said seat system (750, 760, 1000) being configured to provide environmental control substantially at said surface region (1520) of said seat (1000) for providing enhanced user comfort, said seat system (750, 760, 1000) comprising:

(a) a first sensor arrangement (1560, 1570) for sensing one or more physical parameters at least substantially at said surface region (1520, 1530, 1540, 1560); and
(b) a ventilation arrangement (1510, 1590, 1610, 1630) for ventilating substantially said surface region (1520),

wherein said seat system (750, 760, 1000) includes a feedback loop control (750, 760) for feedback controlling at least one of said one or more physical parameters by selectively controlling said ventilation arrangement (1510, 1590, 1610, 1630),
**characterized in**
**that** said ventilation arrangement (1510, 1590, 1610, 1630) is configured to suck air from said surface region (1520) through said seat (1000), and in that
said automobile seat system (750, 760, 1000) is further arranged with a second sensor arrangement (), said second sensor arrangement () being configured for sensing one or more physical parameters associated with the climate of said automobile compartment (30), and in that said one or more physical parameters is used to control said seat (1000) by selectively controlling said ventilation arrangement (1510, 1590, 1610, 1630).

**2.**    A seat system (750, 760, 1000) as claimed in claim 1, said seat system (650, 760, 1000) further including a heating arrangement (400, 410) for heating substantially said surface region (1520), wherein said feedback loop control (750, 760) is operable to control at least one of said one or more physical parameters by selectively controlling said heating arrangement (400; 410).

3. A seat system (750, 760, 1000) as claimed in claim 1 or 2, wherein said sensor arrangement (1560, 1570) is substantially spatially located within said seat (1000) substantially adjacent to said surface region (1520).

4. A seat system (750, 760, 1000) as claimed in claim 1, 2, or 3, wherein said ventilation arrangement (1510, 1590, 1610, 1630) comprises a plurality of ventilation channels distributed within said seat (1000), said plurality of ventilation channels being disposed so as to couple said surface region (1520) to one or more ventilation fans (230, 240).

5. A seat system (750, 760, 1000) as claimed in any one of the preceding claims, wherein said sensor arrangement (1560, 1570) includes one or more temperature sensors (1570) for measuring one or more temperatures of said surface region (1520).

6. A seat system (750, 760, 1000) as claimed in claim 5, wherein said sensor arrangement (1560, 1570) further includes at least one of: one or more humidity sensors for sensing humidity of said surface region (1520), one or more pressure sensors for detecting a spatial extent of said user in contact with said surface region (1520), and one or more sensors for sensing solar radiation (100).

7. A seat system (750, 760, 1000) as claimed in any one of the preceding claims, wherein said feedback loop control is operable to maintain said surface region (1520) at a temperature regulated in respect of a desired degree of comfort selected by the user.

8. A seat system (750, 760, 1000) as claimed in any one of the preceding claims, wherein said surface region (1520) is configured to be in airflow communication with said ventilation arrangement, and with at least a portion of sensors of said sensor arrangement via a plurality of ventilation holes (1510), said ventilation holes (1520) being disposed on said surface region (1520) in a spatial arrangement for optimally ventilating said user when seated in said seat (1000).

9. A seat system (750, 760, 1000) as claimed in any one of the preceding claims, wherein said surface region (1520) is configured to be in airflow communication with said ventilation arrangement, and with at least a portion of sensors of said sensor arrangement via a plurality of ventilation holes (1510), said ventilation holes (1520) having mutually different diameters for optimally ventilating said user when seated in said seat (1000).

10. A seat system (750, 760, 1000) as claimed in any one of the preceding claims, wherein said feedback loop control is operable to being activated remotely for precooling or pre-heating said surface region (1520) prior to said user assuming contact with said surface region (1520).

11. A seat system (750, 760, 1000) as claimed in any one of the preceding claims, **characterized in that** said one or more physical parameters associated with said automobile compartment (30); comprises one or more parameters selected from the group of;
the ambient temperature around the automobile (10); the solar radiation or solar flux (100); the temperature in the compartment (30); the temperature of a coolant of the automobile (10); the excitation voltage applied to a blower or a fan; the air distribution mode or path utilized within the compartment (30).

12. A climate control system (60, 1000) for an automobile (10) including a passenger compartment (30) including at least one seat system as claimed in any one of claims 1 to 11, said control system (60, 1000) including a first control feedback loop for executing climate control within the compartment (30), and a second feedback control loop for executing climate control of one or more surface regions of one or more seats (1000) of said at least one seat system (750, 760, 1000), said one or more surface regions being susceptible to being in contact with said user.

13. An automobile (10) including a climate control system (60, 1000) as claimed in claim 12.

14. A method of providing environmental control using an automobile seat system substantially at a surface region (1520) of an automobile seat (1000) for providing enhanced user comfort, said surface region (1520) being contactable in use to a user of said seat (1000), said method comprising steps of:

   (a) sensing using a first sensor arrangement (1560, 1570) of said seat (1000) one or more physical parameters at least substantially at said surface region (1520, 1530, 1540, 1560);
   (b) ventilating using a ventilation arrangement (1510, 1590, 1610, 1630) of said seat (1000) substantially at said surface region (1520), wherein the ventilated air is sucked from said surface region (1520) through said seat (1000) by means of said ventilation arrangement (1510, 1590, 1610, 1630); and

(c) controlling using a feedback loop control (750, 760) at least one of said one or more physical parameters by selectively controlling said ventilation arrangement (1510, 1590, 1610, 1630);

(d) sensing, using a second sensor arrangement, at least one or more physical parameters associated with said automobile compartment (30);

(e) using said at least one or more physical parameters associated with said automobile compartment (30) to control said seat (1000) by selectively controlling said ventilation arrangement (1510, 1590, 1610, 1630).

**15.** A method as claimed in claim 14, including a step of configuring said feedback loop control (750, 760) to render it operable to being activated remotely for precooling or pre-heating said surface region (1520) prior to said user assuming contact with said surface region (1520).

**Patentansprüche**

**1.** Kraftfahrzeug-Sitzsystem (750, 760, 1000), das einen Kraftfahrzeugsitz (1000) mit einem Oberflächenbereich (1520), der im Gebrauch mit einem Benutzer des Sitzes (1000) in Kontakt gelangen kann, enthält, wobei der Kraftfahrzeugsitz (1000) dazu vorgesehen ist, in einer Kraftfahrzeugzelle (30) angeordnet zu werden, wobei das Sitzsystem (750, 760, 1000) konfiguriert ist, um eine Klimasteuerung im Wesentlichen an dem Oberflächenbereich (1520) des Sitzes (1000) zu schaffen, um einen erhöhten Benutzerkomfort zu schaffen, wobei das Sitzsystem (750, 760, 1000) umfasst:

a) eine erste Sensoranordnung (1560, 1570), um einen oder mehrere physikalische Parameter wenigstens im Wesentlichen an dem Oberflächenbereich (1520, 1530, 1540, 1560) zu erfassen; und

b) eine Belüftungsanordnung (1510, 1590, 1610, 1630), um den Oberflächenbereich (1520) im Wesentlichen zu belüften,

wobei das Sitzsystem (750, 760, 1000) eine Rückkopplungssteuerung (750, 760) enthält, um wenigstens einen des einen oder der mehreren physikalischen Parameter durch wahlweises Steuern der Belüftungsanordnung (1510, 1590, 1610, 1630) durch Rückkopplung zu steuern, **dadurch gekennzeichnet,**

**dass** die Belüftungsanordnung (1510, 1590, 1610, 1630) konfiguriert ist, um Luft von dem Oberflächenbereich (1520) durch den Sitz (1000) zu saugen, und dass

das Kraftfahrzeug-Sitzsystem (750, 760, 1000) ferner mit einer zweiten Sensoranordnung () versehen ist, wobei die zweite Sensoranordnung () konfiguriert ist, um einen oder mehrere physikalische Parameter, die dem Klima der Kraftfahrzeugzelle (30) zugeordnet sind, zu erfassen, und dass der eine oder die mehreren physikalischen Parameter verwendet werden, um den Sitz (1000) durch wahlweises Steuern der Belüftungsanordnung (1510, 1590, 1610, 1630) zu steuern.

**2.** Sitzsystem (750, 760, 1000) nach Anspruch 1, wobei das Sitzsystem (650, 760, 1000) ferner eine Heizanordnung (400, 410) umfasst, um im Wesentlichen den Oberflächenbereich (1520) zu heizen, wobei die Rückkopplungssteuerung (750, 760) betreibbar ist, um wenigstens einen des einen oder der mehreren physikalischen Parameter durch wahlweises Steuern der Heizanordnung (400; 410) zu steuern.

**3.** Sitzsystem (750, 760, 1000) nach Anspruch 1 oder 2, wobei die Sensoranordnung (1560, 1570) räumlich im Wesentlichen innerhalb des Sitzes (1000) im Wesentlichen benachbart zu dem Oberflächenbereich (1520) angeordnet ist.

**4.** Sitzsystem (750, 760, 1000) nach Anspruch 1, 2 oder 3, wobei die Belüftungsanordnung (1510, 1590, 1610, 1630) mehrere Belüftungskanäle umfasst, die innerhalb des Sitzes (1000) verteilt sind, wobei die mehreren Belüftungskanäle so angeordnet sind, dass sie den Oberflächenbereich (1520) mit einem oder mit mehreren Belüftungsgebläsen (230, 240) koppeln.

**5.** Sitzsystem (750, 760, 1000) nach einem der vorhergehenden Ansprüche, wobei die Sensoranordnung (1560, 1570) einen oder mehrere Temperatursensoren (1570) umfasst, um eine oder mehrere Temperaturen des Oberflächenbereichs (1520) zu messen.

**6.** Sitzsystem (750, 760, 1000) nach Anspruch 5, wobei die Sensoranordnung (1560, 1570) wenigstens eine der folgenden Anordnungen umfasst: einen oder mehrere Feuchtigkeitssensoren, um die Feuchtigkeit des Oberflächenbereichs (1520) zu erfassen, einen oder mehrere Drucksensoren, um eine räumliche Ausdehnung des mit dem Oberflächenbereich (1520) in Kontakt befindlichen Benutzers zu erfassen, und einen oder mehrere Sensoren, um Sonnenstrahlung (100) zu erfassen.

7. Sitzsystem (750, 760, 1000) nach einem der vorhergehenden Ansprüche, wobei die Rückkopplungssteuerung betreibbar ist, um den Oberflächenbereich (1520) auf einer Temperatur zu halten, die entsprechend einem gewünschten Komfortgrad, der vom Benutzer gewählt wird, reguliert wird.

8. Sitzsystem (750, 760, 1000) nach einem der vorhergehenden Ansprüche, wobei der Oberflächenbereich (1520) konfiguriert ist, damit er mit der Belüftungsanordnung und mit wenigstens einem Teil von Sensoren der Sensoranordnung über mehrere Belüftungslöcher (1510) in einem Luftstromaustausch steht, wobei die Belüftungslöcher (1520) in dem Oberflächenbereich (1520) in einer räumlichen Anordnung vorgesehen sind, um den Benutzer optimal zu belüften, wenn er auf dem Sitz (1000) sitzt.

9. Sitzsystem (750, 760, 1000) nach einem der vorhergehenden Ansprüche, wobei der Oberflächenbereich (1520) konfiguriert ist, damit er mit der Belüftungsanordnung und mit wenigstens einem Teil von Sensoren der Sensoranordnung über mehrere Belüftungslöcher (1510) in einem Luftstromaustausch steht, wobei die Belüftungslöcher (1520) voneinander verschiedene Durchmesser haben, um den Benutzer optimal zu belüften, wenn er auf dem Sitz (1000) sitzt.

10. Sitzsystem (750, 760, 1000) nach einem der vorhergehenden Ansprüche, wobei die Rückkopplungssteuerung betreibbar ist, um ferngesteuert aktiviert zu werden, um den Oberflächenbereich (1520) im Voraus zu kühlen oder im Voraus zu heizen, bevor der Benutzer einen Kontakt mit dem Oberflächenbereich (1520) herstellt.

11. Sitzsystem (750, 760, 1000) nach einem der vorhergehenden Ansprüche, **dadurch gekennzeichnet, dass** der eine oder die mehreren physikalischen Parameter, die der Kraftfahrzeugfahrgastzelle (30) zugeordnet sind, einen oder mehrere Parameter umfassen, die aus der folgenden Gruppe ausgewählt sind:

    die Umgebungstemperatur um das Kraftfahrzeug (10); die Sonneneinstrahlung oder der Sonnenlichtstrom (100); die Temperatur in der Zelle (30); die Temperatur eines Kühlmittels des Kraftfahrzeugs (10); die Erregungsspannung, die an einen Lüfter oder an ein Gebläse angelegt wird; die Luftverteilungsbetriebsart oder der Luftverteilungsweg, die bzw. der in der Zelle (30) verwendet wird.

12. Klimasteuersystem (60, 1000) für ein Kraftfahrzeug (10), das eine Fahrgastzelle (30) umfasst, die wenigstens ein Sitzsystem nach einem der Ansprüche 1 bis 11 enthält, wobei das Steuersystem (60, 1000) eine erste Rückkopplungssteuerung, um eine Klimasteuerung in der Zelle (30) auszuführen, und eine zweite Rückkopplungssteuerung, um eine Klimasteuerung eines oder mehrerer Oberflächenbereiche eines oder mehrerer Sitze (1000) des wenigstens einen Sitzsystems (750, 760, 1000) auszuführen, enthält, wobei der eine oder die mehreren Oberflächenbereiche mit dem Benutzer in Kontakt gelangen können.

13. Kraftfahrzeug (10), das ein Klimasteuersystem (60, 1000) nach Anspruch 12 enthält.

14. Verfahren zum Schaffen einer Klimasteuerung unter Verwendung eines Kraftfahrzeug-Sitzsystems im Wesentlichen an einen Oberflächenbereich (1520) eines Kraftfahrzeugsitzes (1000), um einen erhöhten Benutzerkomfort zu schaffen, wobei der Oberflächenbereich (1520) im Gebrauch mit einem Benutzer des Sitzes (1000) in Kontakt gebracht werden kann, wobei das Verfahren die folgenden Schritte umfasst:

    (a) Erfassen eines oder mehrerer physikalischer Parameter wenigstens im Wesentlichen an dem Oberflächenbereich (1520, 1530, 1540, 1560) unter Verwendung einer ersten Sensoranordnung (1560, 1570) des Sitzes (1000);
    (b) Belüften im Wesentlichen an dem Oberflächenbereich (1520) unter Verwendung einer Belüftungsanordnung (1510, 1590, 1610, 1630) des Sitzes (1000), wobei die Belüftungsluft mittels der Belüftungsanordnung (1510, 1590, 1610, 1630) von dem Oberflächenbereich (1520) durch den Sitz (1000) gesaugt wird; und
    (c) Steuern wenigstens eines des einen oder der mehreren physikalischen Parameter unter Verwendung einer Rückkopplungssteuerung (750, 760) durch wahlweises Steuern der Belüftungsanordnung (1510, 1590, 1610, 1630);
    (d) Erfassen wenigstens eines oder mehrerer physikalischer Parameter, die der Kraftfahrzeugzelle (30) zugeordnet sind, unter Verwendung einer zweiten Sensoranordnung;
(e) Verwenden des wenigstens einen oder der mehreren physikalischen Parameter, die der Kraftfahrzeugzelle (30) zugeordnet sind, um den Sitz (1000) durch wahlweises Steuern der Belüftungsanordnung (1510, 1590, 1610, 1630) zu steuern.

**15.** Verfahren nach Anspruch 14, das einen Schritt zum Konfigurieren der Rückkopplungssteuerung (750, 760) umfasst, um sie so betreibbar zu machen, dass sie ferngesteuert aktiviert werden kann, um den Oberflächenbereich (1520) im Voraus zu kühlen oder im Voraus zu heizen, bevor der Anwender einen Kontakt mit dem Oberflächenbereich (1520) herstellt.

**Revendications**

**1.** Système de siège (750, 760, 1000) de véhicule automobile comprenant un siège (1000) de véhicule automobile ayant une zone de surface (1520) pouvant être en contact, en utilisation, avec un utilisateur dudit siège (1000), ledit siège (1000) de véhicule automobile étant destiné à être mis en place dans un habitacle (20) de véhicule automobile, ledit système de siège (750, 760, 1000) étant configuré de manière à offrir une climatisation essentiellement au niveau de ladite zone de surface (1520) dudit siège (1000) de manière à fournir un confort accru pour l'utilisateur, ledit système de siège (750, 760, 1000) comprenant :

(a) un premier ensemble de détection (1560, 1570) destiné à détecter un ou plusieurs paramètres physiques au moins essentiellement au niveau de ladite zone de surface (1520, 1530, 1540, 1560) ; et
(b) un ensemble de ventilation (1510, 1590, 1610, 1630) destiné à la ventilation essentiellement de ladite zone de surface (1520),

dans lequel ledit système de siège (750, 760, 1000) comprend une commande à boucle de rétroaction (750, 760) pour le contrôle par rétroaction d'au moins l'un desdits un ou plusieurs paramètres physiques par contrôle sélectif dudit ensemble de ventilation (1510, 1590, 1610, 1630),
***caractérisé***
***en ce que*** ledit ensemble de ventilation (1510, 1590, 1610, 1630) est configuré pour aspirer de l'air de ladite zone de surface (1520) à travers ledit siège (1000), et
***en ce que*** ledit système de siège (750, 760, 1000) de véhicule automobile est muni complémentairement d'un deuxième ensemble de détection, ledit deuxième ensemble de détection étant configuré pour détecter un ou plusieurs paramètres physiques associés aux conditions climatiques régnant dans ledit habitacle (30) du véhicule automobile, et
***en ce que*** lesdits un ou plusieurs paramètres physiques sont utilisés pour contrôler ledit siège (1000) par contrôle sélectif dudit ensemble de ventilation (1510, 1590, 1610, 1630).

**2.** Système de siège (750, 760, 1000) selon la revendication 1, ledit système de siège (750, 760, 1000) comprenant de plus un ensemble chauffant (400, 410) pour chauffer essentiellement ladite zone de surface (1520), dans lequel ladite commande à boucle de rétroaction (750, 760) est utilisable pour le contrôle d'au moins l'une desdits un ou plusieurs paramètres physiques par un contrôle sélectif dudit ensemble chauffant (400, 410).

**3.** Système de siège (750, 760, 1000) selon la revendication 1 ou 2, dans lequel ledit ensemble de détection (1560, 1570) est situé spatialement essentiellement dans ledit siège (1000) de manière essentiellement adjacente à ladite zone de surface (1520).

**4.** Système de siège (750, 760, 1000) selon la revendication 1, 2 ou 3, dans lequel ledit ensemble de ventilation (1510, 1590, 1610, 1630) comprend une pluralité de conduits de ventilation répartis dans ledit siège (1000), ladite pluralité de conduits de ventilation étant disposés de manière à associer ladite zone de surface (1520) à un ou plusieurs ventilateurs (230, 240).

**5.** Système de siège (750, 760, 1000) selon l'une quelconque des revendications précédentes, dans lequel ledit ensemble de détection (1560, 1570) comprend un ou plusieurs capteurs de température (1570) pour mesurer une ou plusieurs températures de ladite zone de surface (1520).

**6.** Système de siège (750, 760, 1000) selon la revendication 5, dans lequel ledit ensemble de détection (1560, 1570) comprend en outre au moins l'un parmi : un ou plusieurs capteurs d'humidité pour détecter l'humidité de ladite zone de surface (1520), un ou plusieurs capteurs de pression pour détecter une étendue spatiale dudit utilisateur en contact avec ladite zone de surface (1520), et un ou plusieurs capteurs pour détecter un rayonnement solaire (100).

7. Système de siège (750, 760, 1000) selon l'une quelconque des revendications précédentes, dans lequel ladite commande à boucle de réaction est utilisable pour maintenir ladite zone de surface (1520) à une température régulée selon un degré désiré de confort choisi par l'utilisateur.

8. Système de siège (750, 760, 1000) selon l'une quelconque des revendications précédentes, dans lequel ladite zone de surface (1520) est configurée pour être en communication d'écoulement d'air avec ledit ensemble de ventilation, et avec au moins une partie des capteurs dudit ensemble de détection via une pluralité d'orifices de ventilation (1510), lesdits orifices de ventilation (1520) étant disposés sur ladite zone de surface (1520) selon un ensemble spatial destiné à ventiler de manière optimale ledit utilisateur lorsqu'il est assis sur ledit siège (1000).

9. Système de siège (750, 760, 1000) selon l'une quelconque des revendications précédentes, dans lequel ladite zone de surface (1520) est configurée pour être en communication d'écoulement d'air avec ledit ensemble de ventilation, et avec au moins une partie des capteurs dudit ensemble de détection via une pluralité d'orifices de ventilation (1510), lesdits orifices de ventilation (1520) ayant des diamètres différents les uns des autres afin de ventiler de manière optimale ledit utilisateur lorsqu'il est assis sur ledit siège (1000).

10. Système de siège (750, 760, 1000) selon l'une quelconque des revendications précédentes, dans lequel ladite commande à boucle de réaction est utilisable pour être actionnée à distance afin de prérefroidir ou de préchauffer ladite zone de surface (1520) avant que ledit utilisateur ne soit en contact avec ladite zone de surface (1520).

11. Système de siège (750, 760, 1000) selon l'une quelconque des revendications précédentes, *caractérisé en ce que* lesdits un ou plusieurs paramètres physiques associés audit habitacle (30) du véhicule automobile comprennent un ou plusieurs paramètres choisis dans le groupe constitué de : la température ambiante autour du véhicule automobile (10) ; le rayonnement solaire ou le flux solaire (100) ; la température dans l'habitacle (30) ; la température d'un réfrigérant du véhicule automobile (10) ; la tension d'excitation appliquée à une soufflante ou à un ventilateur ; le mode ou le trajet de distribution de l'air utilisé dans l'habitacle (30).

12. Système de climatisation (60, 1000) pour un véhicule automobile (10) comprenant un habitacle (30) comprenant au moins un système de siège selon l'une quelconque des revendications 1 à 11, ledit système de climatisation (60, 1000) comprenant une première boucle de commande à rétroaction pour assurer la climatisation dans l'habitacle (30), et une deuxième boucle de commande à rétroaction pour assurer la climatisation d'une ou plusieurs zones de surface d'un ou plusieurs sièges (1000) dudit au moins un système de siège (750, 760, 1000), lesdits une ou plusieurs zones de surface étant susceptibles d'être en contact avec ledit utilisateur.

13. Véhicule automobile (10) comprenant un système de climatisation (60, 1000) selon la revendication 12.

14. Procédé pour assurer une climatisation en utilisant un système de siège de véhicule automobile essentiellement au niveau d'une zone de surface (1520) d'un siège (1000) de véhicule automobile de manière à fournir un confort accru pour l'utilisateur, ladite zone de surface (1520) pouvant être en contact, en utilisation, avec un utilisateur dudit siège (1000), ledit procédé comprenant les étapes consistant à :

   (a) détecter, en utilisant un premier ensemble de détection (1560, 1570) dudit siège (1000), un ou plusieurs paramètres physiques au moins essentiellement au niveau de ladite zone de surface (1520, 1530, 1540, 1560) ;
   (b) ventiler, en utilisant un ensemble de ventilation (1510, 1590, 1610, 1630) dudit siège (1000) essentiellement au niveau de ladite zone de surface (1520), dans lequel l'air ventilé est aspiré de ladite zone de surface (1520), à travers le siège (1000), au moyen dudit ensemble de ventilation (1510, 1590, 1610, 1630) ; et
   (c) contrôler, en utilisant une commande à boucle de rétroaction (750, 760), au moins l'un desdits un ou plusieurs paramètres physiques par contrôle sélectif dudit ensemble de ventilation (1510, 1590, 1610, 1630) ;
   (d) détecter, en utilisant un deuxième ensemble de détection, au moins un ou plusieurs paramètres physiques associés audit habitacle (30) du véhicule automobile ;
   (e) utiliser lesdits un ou plusieurs paramètres physiques associés audit habitacle (30) du véhicule automobile pour contrôler ledit siège (1000) par contrôle sélectif dudit ensemble de ventilation (1510, 1590, 1610, 1630).

15. Procédé selon la revendication 14, comprenant une étape de configuration de ladite commande à boucle de rétroaction (750, 760) pour qu'elle puisse être activée à distance afin de prérefroidir ou de préchauffer ladite zone de surface (1520) avant que ledit utilisateur ne soit en contact avec ladite zone de surface (1520).

**FIG. 1**

FIG. 2

FIG. 3

FIG. 4

FIG. 5

$T_{ref}$  +  $-$  $T_{int}$

700

$\Delta$

$T_{int}$

60  710

600  $T_{seat}$

$K_{omf}$

400, 410

+

230, 240  $\Delta$

750

$-$

760

30

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10044168

- US 2005161986 A